Europäisches Patentamt

European Patent Office

Office européen des brevets

(11) Publication number: **0 142 590**
**B1**

## EUROPEAN PATENT SPECIFICATION

(45) Date of publication of patent specification: **20.01.88**

(51) Int. Cl.⁴: **A 23 C 20/02**

(21) Application number: **83810529.4**

(22) Date of filing: **16.11.83**

(54) A process for manufacture of soybean curd.

(43) Date of publication of application:
**29.05.85 Bulletin 85/22**

(45) Publication of the grant of the patent:
**20.01.88 Bulletin 88/03**

(84) Designated Contracting States:
**CH DE FR GB IT LI NL**

(56) References cited:
PATENTS ABSTRACTS OF JAPAN, vol. 4, no.
182 (C-35)664r, 16th December 1980; & JP - A -
55 120 764 (KENZOU SAIKAI) 17-09-1980
JOURNAL OF FOOD SCIENCE, vol. 46, no. 6,
November/December 1981, pages 1734-1737,
Chicago, III., US; S.-J. TSAI et al.: "Studies on
the yield and quality characteristics of tofu"
PATENTS ABSTRACTS OF JAPAN, vol. 6, no. 7
(C-87)885r, 16th January 1982; & JP - A - 56 131
361 (TOMINAGA YAMADA) 14-10-1981
JOURNAL OF FOOD SCIENCE, vol. 45, no. 1,
January/February 1980, pages 32-34, Chicago,
III., US; J.Y. LU et al.: "Use of calcium salts for
soybean curd preparation"

(73) Proprietor: **Moriya, Isao**
**29 Aoyama 1-chome Midori-ku**
**Nagoya-shi Aichi (JP)**

(72) Inventor: **Moriya, Isao**
**29 Aoyama 1-chome Midori-ku**
**Nagoya-shi Aichi (JP)**

(74) Representative: **Baggiolini, Raimondo et al**
**Racheli & Fiammenghi Via San Gottardo 15**
**CH-6900 Lugano (CH)**

(56) References cited:
PATENTS ABSTRACTS OF JAPAN, vol. 6, no.
149 (C-118)1027r, 10th August 1982; & JP - A -
57 68 752 (SHOJI ASAKURA) 27-04-1982
CHEMICAL ABSTRACTS, vol. 97, no. 9, August
1982, page 527, no. 71167y, Columbus, Ohio,
US
CHEMICAL ABSTRACTS, vol. 90, no. 5, January
1979, page 397, no. 37831f, Columbus, Ohio,
US
CHEMICAL ABSTRACTS, vol. 88, no. 25, 19th
June 1978, page 582, no. 188517t, Columbus,
Ohio, US

Courier Press, Leamington Spa, England.

## Description

This invention relates to manufacture of soybean curd, and more particularly to an improved process for manufacture of soybean curd of such a particular type as called "tofu" in Japan.

The soybean curd called "tofu" is one of the typical Japanese foods, which has been widely used since old times and is currently very popular in Japan. Also in the United States and some of European and other countries, the soybean curd has come to be regarded as an attractive food because it contains high quality protein and is available at a low price.

The soybean curd now available in the markets under the name of "tofu" (excluding such special ones as those baked, frozen and dried, or fried) may be roughly classified into four types, that is, "momen tofu" (which substantially means a cotton strained tofu), "kinugoshi tofu" (which substantially means a tofu having silky body surfaces), "soft tofu", and "packed tofu".

The type called "momen tofu" is generally manufactured by putting prepared crushed soybean milk gel into an open-top, perforated mold vessel having its perforated walls internally covered with a water-permeable cotton cloth (cotton gauze) and then molding the same in the vessel into a mass by applying an adjusted pressure thereupon, whereby surplus water flows out through the cotton cloth as well as the perforated walls, and thus is removed from the vessel. Finally, the obtained mass is cooled down and then cut into a desired number of cubic pieces which are final products. The "momen tofu" thus produced is generally less in water content than any one of the other three types of "tofu".

The type called "kinugoshi tofu" is generally manufactured by pouring prepared soybean milk into an open-top, non-perforated mold vessel and then mixing it in the vessel with a coagulant into a coagulated mass, without dewatering. The obtained mass is cooled down and then cut into a desired number of cubic pieces which are final products. Because of no dewatering, the "kinugoshi tofu" is more watery and softer than the "momen tofu" and has very smooth and silky body surfaces while being very easily broken into pieces.

The type called "soft tofu", which is a relatively modern type of "tofu", is generally manufactured by pouring prepared soybean milk into an open-top, perforated mold vessel having its perforated walls internally covered with a water-permeable cotton cloth together with an overlapping, anti-water-permeable sheet made of synthetic resin, and then mixing it with a coagulant to effect coagulation. When the resulted mixture is coagulated to a certain extent, the anti-water-permeable sheet is removed, so that a certain amount of water contained in the mixture flows out through the water-permeable cotton cloth as well as the perforated walls and thus is removed from the vessel. Then, the coagulation is continued to its full extent under an adjusted pressure, until a desired, fully coagulated mass is obtained. Finally, the obtained mass is cooled down and then cut into a desired number of cubic pieces which are final products. The "soft tofu" thus produced has intermediate properties between those of the "momen tofu" and those of the "kinugoshi tofu".

The type called "packed tofu", which is also a relatively modern type of "tofu", is generally manufactured by pouring prepared soybean milk (preferably cooled down to about 4—15°C) together with an added coagulant, into and then vacuum-packed in each of a given number of film-made cubic containers, heating the same into coagulated gel, and then cooling down the same after full coagulation, whereby vacuum-packed final products are obtained.

As apparent from the above description, the four types of soybean curd are somewhat different to one another in the process of manufacture. However, it is common to all of the four types of soybean curd that prepared soybean milk is coagulated into gel by means of a coagulant.

As such the coagulant, calcium sulfate is now most extensively used for the current mass production of the aforedescribed four types of soybean curd, while, in some cases, gluco-delta-lactone and calcium chloride are also used for the same purpose.

On the other hand, it is well known in the field of invention that natural bittern (magnesium chloride) was used as the coagulant many years ago. It is also well known that it is theoretically possible to produce such commercially valuable soybean curd as is quite excellent in flavor, adequately soft and elastic, very good in taste, mouth feel, body texture, and surface luster, provided that bittern is used as the coagulant under certain proper conditions.

Nevertheless, no one knows details as to how and under what conditions bittern was added to soybean milk in such old days. In fact, it has been proved technically very difficult to use bittern (magnesium chloride) as the coagulant for the manufacture of soybean curd on a mass production scale, because magnesium chloride contained in the bittern reacts so quickly with soybean milk into local or heterogeneous coagulation, as compared to any one of the currently used coagulants such as calcium sulfate, gluco-delta-lactone and calcium chloride, resulting in that the produced soybean curd is often too hard, not uniform in quality, poor in water retention, and/or dissatisfactory in surface luster, body texture and mouth feel. In other words, it is considered that use of bittern (magnesium chloride) as the coagulant is always accompanied by high skill and accumulated experience, which is a fatal disadvantage in the manufacture of soybean curd on a mass production scale under an automatic system at a low manufacturing cost. And, this is why the above-mentioned calcium sulfate, gluco-delta-lactone and calcium chloride have taken the place of bittern (magnesium chloride) as the coagulant in the current manufacture of soybean curd on a mass production scale.

2

# 0 142 590

However, it is clear that none of the above-mentioned, currently used coagulants can exceed bittern (magnesium chloride) from the viewpoint of producing high quality of products which taste good. In addition thereto, it is presumed that calcium sulfate (55—120 mg of calcium sulfate is generally contained per 100 g of product soybean curd) is not good for the health of human being. Further, in the case where the above-mentioned currently used coagulants are employed, spreadability of seasonings such as soy sauce into a product body has proved to be relatively poor as compared to the case where magnesium chloride is employed.

Therefore, various attempts have been made to produce good-tasting, high quality soybean curd by using magnesium chloride as the coagulant, as disclosed, for example, in Japanese Patent Publication No. 56—39866, published September 16, 1981 (Patent Application No. 53—48253, filed April 21, 1978, Seiich KUBOTA as Inventor and Applicant). This prior art is concerned with an improved process for manufacturing the two types of soybean curd called "kinugoshi tofu" and "soft tofu" by using magnesium chloride as the coagulant. More particularly, this prior art method comprises the steps of: (1) pouring prepared soybean milk into an agitating bath and producing a certain flow (preferably one way flow) of the soybean milk in the bath; (2) adding magnesium chloride to the flowing soybean milk (6—9 g of MgCl in powder or aqueous solution/1 l of soybean milk) to obtain a flowing state of mixture thereof; (3) transferring the obtained mixture into a mold vessel and then leaving the same for about one hour until a coagulated mass is produced; and (4) pouring a prepared, heated aqueous solution of 40% MgCl over the coagulated mass.

This prior art method, however, is disadvantageous in the following points: the first being that the method is not applicable to manufacture of soybean curd of the type called "momen tofu" because the process for the "momen tofu" requires such particular steps of crushing a coagulated gel of the mixture of soybean milk and the added magnesium chloride and then transferring the resulted crushed gel into a perforated mold vessel for molding the same into a mass under pressure; the second being that local or heterogeneous coagulation of a mixture of soybean milk and the added magnesium chloride is inevitably invited because coagulating reaction of the magnesium chloride with the soybean milk is excessively accelerated when the mixture thereof is in the continued flowing state; the third being that manufacturing efficiency is poor because the method requires such a step of leaving the resulted mixture for about one hour in the mold vessel; and the fourth being that it is considered that, if as much as 6—9 g of MgCl is added per 1 l of the flowing soybean milk, the resulted mixture is likely to be coagulated before it is transferred into the mold vessel. Thus, this prior art method may often be unpractical for the manufacture of the desired good-tasting, high quality soybean curd on a mass production scale.

It is, therefore, an object of the present invention to substantially reduce the above discussed disadvantages inherent to the prior art methods for the manufacture of soybean curd on a mass production scale in which calcium sulfate, gluco-delta-lactone, or calcium chloride is used as a coagulant.

Another object of the invention is to provide an improved, efficient process for the manufacture of good-tasting, high quality soybean curd on a mass production scale, which permits the use of magnesium chloride or bittern as a coagulant, without high skill and accumulated experience.

A further object of the invention is to provide an improved, efficient process for the manufacture of good-tasting, commercially valuable soybean curd on an automatic, mass production scale, which permits use of magnesium chloride or bittern as a coagulant, under minimized disadvantageous influence by such particular conditions as soaking time and temperature for material soybeans, conditions for grinding the soaked soybeans into soybean paste, and/or heating time and temperature for the soybean paste.

According to the present invention, there is provided a process for the manufacture of soybean curd, wherein magnesium chloride is used as a coagulant, characterized in that the process comprises in combination the steps of: (a) homogenizing by intensely agitating a quantity of prepared soybean milk having 11—14 weight% of solids content and 5—7 weight% protein, in an agitating bath, such that a homogenized colloidal state thereof is produced in which contained soybean protein is homogeneously dispersed and contained soybean fat is homogeneously emulsified; (b) adding a stabilized aqueous solution including a quantity of magnesium chloride, an emulsifying agent and a quantity of emulsified edible oil to said soybean milk to obtain a mixture thereof, in which 2—4 g of magnesium chloride per 1000 g of said soybean milk is contained; (c) again intensely agitating the obtained mixture for 2—4 seconds, immediately after the preceding step (b), such that the added magnesium chloride is instantaneously dispersed throughout said soybean milk; (d) stopping the flow of said mixture to substantially a standstill immediately after the preceding step (c), that is, before commencement of coagulating reaction of said soybean milk with said magnesium chloride; and (e) leaving said mixture into coagulated gel. ·

A feature of the invention resides in that the homogeneously emulsified soybean lipid (fat) contained in the soybean milk serves to restrict an instantaneous coagulating reaction of the soybean milk (soybean protein) with the added magnesium chloride, so that the reaction time thereof becomes slightly slower to such an extent that the added magnesium chloride is permitted to become well dispersed throughout the soybean milk before commencement of the coagulating reaction.

Another feature of the invention resides in that commencement of the coagulating reaction of the soybean milk (soybean protein) with the added magnesium chloride is deferred within a certain limited

3

**0 142 590**

time, by adding an adjusted quantity of well emulsified edible oil or fat premixed with a prepared aqueous solution of magnesium chloride to be added later to the soybean milk.

A further feature of the invention resides in that the homogeneous dispersion of the soybean protein contained in the soybean milk serves to reduce local or heterogeneous coagulation of the soybean protein, conditioned that commencement of the coagulating reaction of the added magnesium chloride with the soybean milk can be intentionally deferred.

Further, it is a presumption by the Inventor that magnesium chloride dissolved in soybean milk may have such a specific property that serves to maintain a homogenized colloidal state of the soybean milk and a good dispersion not only of the contained soybean protein, soybean fat lipid (fat) and other original contents in the soybean milk but also of the secondarily added additives such as flavoring additives, edible oil or fat, and an emulsifying agent, and that this specific property may more or less contribute to the unexpectedly good results obtained by the process according to the invention.

It is also a presumption by the Inventor that (1) the above discussed specific property of the dissolved magnesium chloride, (2) the above discussed intentionally deferred commencement of the coagulating reaction of the soybean milk with the added magnesium chloride, and (3) the homogeneous dispersion of the soybean protein in the soybean milk are all important factors to the success of the present invention.

As opposed to the present invention, JP—A—56—131361 discloses the use of magnesium chloride in combination with marrow powder of animal bones to retard the coagulation of soybean protein by the magnesium chloride (natural bittern). The marrow powder of animal bones contains calcium, collagen and mucopolysaccharides but not an aqueous solution of magnesium chloride which further includes an emulsifying agent and emulsified edible oil. Thus, it is obvious that the coagulation retardation of soybean protein according to this prior art is caused by a mechanism (not clarified) which is completely different from the coagulation retarding mechanism of the present invention.

Chemical Abstracts Vol. 90 (1979), Item 37831f and Vol. 88 (1978), Item 188517t equally disclose the use of magnesium chloride in combination with an edible oil (hydrogenated oil) to obtain a slow-reacting soybean protein coagulant. However, either prior art fails to suggest additional inclusion, in an aqueous solution, of an emulsifying agent which is an extremely significant element in stably keeping the co-existant edible oil as minute oil particles to maximize the coagulation retardation function of the edible oil.

An advantage of the invention is that the product soybean curd is good in taste, acceptable in mouth feel, flavor, surface luster, body texture, and mellowness, and uniform in quality.

Another advantage of the invention is that the process is applicable to the manufacture of any one of the four types of soybean curd, namely, "momen tofu", "kinugoshi tofu", "soft tofu", and "packed tofu", by simply providing one or more additional steps to the process.

A still further advantage of the invention is that it permits production of good-tasting, commercially valuable soy bean curd flavored with an added flavoring additive or additives.

Other objects, features and advantages of the invention will become apparent from the following detailed description.

The soybean milk (hydrophilic sol of soybean protein) used in the process of the present invention may be prepared in accordance with any of the conventional methods. For instance, the soybean milk may be prepared in the following steps:

(A) soaking material soybeans in water to soften them;

(B) grinding the softened soybeans into soybean paste called "go", with water and an anti-foaming agent added thereto;

(C) heating the obtained soybean paste with added water by boiling or by blowing hot water vapor thereinto (at this step, the greater part of the soybean protein becomes soluble in water); and

(D) leaching or filtering the heated soybean paste by means of a known residue separator equipped with perforated sheet metals or a known filtering cloth bag to remove solid residue comprised of hulls, fibers and other insoluble contents called "okara"; and

(E) juicy portion obtained after removal of the residue from the soybean paste is a desired soybean milk in which soybean protein, soybean lipid (fat), soybean phospholipid, non-fibrous carbohydrates, minerals, and water are contained.

The soybean milk thus prepared is adjusted in a storing tank to have a solids content in the range of 11—14 wt.% and a protein content in the range of 5—7 wt.%, preferably 5.5—6.5 wt.%.

A given quantity of the prepared soybean milk, having its solids and protein contents adjusted, is transferred, for example under vacuum, from the storing tank into an agitating bath, and intensely agitated in the bath by means of a known agitating blade or the like to produce a homogenized colloidal state thereof in which the contained soybean protein is homogeneously dispersed and also the contained soybean lipid (fat) is homogeneously emulsified. It is considered that the homogeneous dispersion of the protein substantially serves to reduce local or heterogeneous coagulation thereof. It is also considered that the phospholipid contained in the soybean milk serves as an emulsifying agent acting upon the soybean fat.

Then, magnesium chloride in a quantity of 2—4 g/1000 g of soybean milk is added to the soybean milk to obtain a mixture thereof. The relative dosing quantity of magnesium chloride may preferably be decreased as the used soybean milk is relatively increased in quantity. The magnesium chloride is added in

4

the form of an aqueous solution which also includes an edible oil or fat and a known emulsifying agent, for example glyceride, in desired proportions.

As the edible oil or fat, various kinds of vegetable and animal oils and fats, such as soybean oil, corn oil, palm oil, coconut oil, rape oil, butter, lard, tallow and others, are available.

If desired, the aqueous solution of magnesium chloride may additionally include phospholipid. In this case, the phospholipid and the emulsifying agent cooperate to emulsify the added edible oil or fat.

By adjusting the quantity of the emulsified fat or oil, commencement of the coagulating reaction of the added magnesium chloride with soybean milk (soybean protein) can be intentionally deferred within a certain limited time.

Further, if desired, one or more of flavoring additives, such as dried and powdered green laver or sea tangle, sesame seeds, honey or other, may be added to the soybean milk together with the magnesium chloride. Or otherwise, the flavoring additive, for example honey, may be pre-mixed with the aqueous solution of magnesium chloride.

Immediately after the preceding step, the obtained mixture of the soybean milk and the added coagulant (magnesium chloride) is again agitated intensely to such an extent that the added coagulant is instantaneously dispersed throughout the soybean milk, and then flowing of the mixture, caused by the agitation, is quickly stopped substantially to a standstill for deferring commencement of coagulating reaction of the soybean milk with the added magnesium chloride and also for minimizing development of undesirable local or heterogeneous coagulation thereof. This flow-stopping may be performed, for example, by instantaneously stopping the agitating blade in the agitating bath or otherwise by inserting a stopper blade into the flow of the mixture. Thereafter, the mixture is matured into coagulated gel.

The above steps are common to manufacture of all the four types of soybean curd, that is, "momen tofu", "kinugoshi tofu", "soft tofu" and "packed tofu". However, one or more additional steps are required in accordance with the types of soybean curd as desired.

In manufacture of the type called "momen tofu", the coagulated gel formed in the preceding step is crushed and then the obtained crushed gel is transferred into an open-top, perforated mold vessel having its perforated walls internally covered with a water-permeable cotton cloth. Then, the crushed gel is molded in the vessel into a mass by applying an adjusted pressure thereupon, whereby surplus water is removed through the cotton cloth and the perforated walls. As a final step, the obtained mass is cooled down and then cut into a desired number of cubic pieces which are final products.

In manufacture of the type called "soft tofu", the mixture of the soybean milk and the added magnesium chloride is transferred, immediately after the preceding flow-stopping step, into an open-top, perforated mold vessel having its perforated walls internally covered with a water-permeable cotton cloth together with an overlapping, anti-water-permeable sheet. In the course that the transferred mixture is coagulated into gel, the anti-water-permeable sheet is removed from the mold vessel and then an adjusted pressure is applied upon the resulted gel so that a certain quantity of water contained in the gel is removed through the cotton cloth and the perforated walls. As a final step, the obtained mass is cooled down and then cut into a desired number of cubic pieces which are final products.

In manufacture of the type called "kinugoshi tofu", the mixture of the soybean milk and the added magnesium chloride is transferred, immediately after the preceding flow-stopping step, into an open-top, non-perforated mold vessel, and then the mixture is matured into a coagulated mass in the vessel, without any dewatering. The obtained coagulated mass is cooled down and then cut into a desired number of cubic pieces which are final products.

In manufacture of the type called "packed tofu", the mixture of the soybean milk and the added magnesium chloride, cooled to about 4—25°C, is poured into and vacuum-packed in each of a desired number of film-made cubic containers immediately after the preceding flow-stopping step. The mixture is coagulated into gel in each of the containers under heated condition, and then cooled down after full coagulation, whereby vacuum-packed final products are obtained.

## Example

### "Momen tofu"

100 g of a mixture, which is comprised of 74.7 wt.% hot water, 25 wt.% soybean oil, 0.2 wt.% phospholipid, 0.05 wt.% glyceride as an emulsifying agent, and 0.05 wt.% carragheenin (Irish moss extractive) as a stabilizer, is mixed with 40 g of powdered magnesium chloride by means of a known mixer in order to prepare a stabilized aqueous solution of the magnesium chloride containing well emulsified soybean oil.

12,500 g of prepared soybean milk, having a temperature of about 80°C and a solids content of 12.5—13.0 wt.%, is poured into a round-shaped agitating bath and intensely agitated in the bath to produce a homogenized colloidal state thereof. Then, the above prepared solution is added to the soybean milk and the resulted liquid mixture is intensely agitated for 2—4 seconds. Then, flowing of the mixture is quickly stopped for minimizing development of local or heterogeneous coagulation thereof. After leaving the mixture for about 20 minutes into coagulated gel, the resulted gel is crushed and then transferred into an open-top, perforated mold vessel for molding the same in the vessel into a mass by applying an adjusted pressure thereupon. The obtained mass is cooled down and then cut into twenty-five cubic pieces of lipid-enriched and good-tasting final products each weighing about 450 g. The obtained product has a rupture strength of 49.3 g/cm, while a typical conventional "momen tofu" has that of 70 g/cm. This means that the product according to the invention is adequately soft.

Comparison test

The following table shows the results of an organoleptic test by twenty adults, in which the mark "very good" was given with positive approvals of more than 18 persons among 20; the mark "good" was given with positive approvals of more than 12 persons but less than 17 persons; the mark "ordinary" was given when positive approvals remained in the range of 7—11 persons; the mark "poor" was given when positive approvals remained in the range of 5—6 persons; and the mark "very poor" was given when positive approvals remained less than 4 persons.

TABLE

| Properties of Product / Used Coagulant | Taste | Mouth Feel | Hardness (g/cm²) | Surface Luster | Body Texture | Seasoning Spread-ability into Body |
|---|---|---|---|---|---|---|
| Currently used coagulant (calcium sulfate, or gulco-delta-lactone, or calcium chloride) | poor | ordinary | 30~100 | good | good | poor |
| Magnesium chloride applied substantially in the same manner as of the above currently used coagulant | ordinary | poor | 150~200 | poor | very poor | good |
| Magnesium chloride in powder or granule (otherwise the same as the present invention) | good | good | 70~120 | good | good | good |
| Magnesium chloride applied in aqueous solution according to the present invention | very good | very good | 50~100 | very good | very good | good |

Claims

1. A process for manufacture of soybean curd, wherein magnesium chloride is used as a coagulant, characterized in that the process comprises in combination the steps of:

(a) homogenizing by intensely agitating a quantity of prepared soybean milk having 11—14 weight% of solids content and 5—7 weight% protein, in an agitating bath, such that a homogenized colloidal state thereof is produced in which contained soybean protein is homogeneously dispersed and contained soybean fat is homogeneously emulsified;

(b) adding a stabilized aqueous solution including a quantity of magnesium chloride, an emulsifying agent and a quantity of emulsified edible oil to said soybean milk to obtain a mixture thereof, in which 2—4 g of magnesium chloride per 1000 g of said soybean milk is contained;

(c) again intensely agitating the obtained mixture for two to four seconds, immediately after the preceding step (b), such that the added magnesium chloride is instantaneously dispersed throughout said soybean milk;

(d) stopping the flow of said mixture to substantially a standstill immediately after the preceding step (c), that is, before commencement of coagulating reaction of said soybean milk with said magnesium chloride; and

(e) leaving said mixture into coagulated gel.

2. A process for manufacture of soybean curd according to Claim 1, characterized in that the process further includes additional steps of: crushing said coagulated gel; transferring the obtained crushed gel into a perforated mold vessel having its perforated walls internally covered with a water-permeable cloth; and then molding the same into a mass by applying an adjusted pressure thereon.

3. A process for manufacture of soybean curd according to Claim 1, characterized in that the process further includes additional steps of: rapidly transferring said mixture from said agitating bath into a perforated mold vessel having its perforated walls internally covered with a water-permeable cloth together with an impermeable sheet, immediately after the preceding step (d); and the subsequent step (e) is carried out in said perforated mold vessel wherein said impermeable sheet is removed in the course of said step (e).

4. A process for manufacture of soybean curd according to Claim 1, characterized in that the process further includes an additional step of rapidly transferring said mixture from said agitating bath into a non-perforated mold vessel immediately after said preceding step (d); and the subsequent step (e) is carried out in said non-perforated mold vessel.

5. A process for manufacture of soybean curd according to Claim 1, characterized in that the process further includes an additional step of pouring said mixture and vacuum packing in each of a deisred number of containers immediately after the preceding step (d); and the subsequent step (e) is carried out in each of said containers under heated condition.

6. A process for manufacture of soybean curd according to Claim 1, characterized in that said solution further includes phospholipid.

7. A process for manufacture of soybean curd according to Claim 1, characterized in that said solution further includes a flavoring additive admixed therewith.


**Patentansprüche**

1. Verfahren zur Herstellung eines Sojabohnenquarks, wobei Magnesiumchlorid als ein Koagulationsmittel verwendet wird, dadurch gekennzeichnet, daß das Verfahren in Kombination die Schritte umfaßt:

(a) Homogenisieren einer Menge einer zubereiteten Sojamilch, die 11—14 Gew.-% eines Feststoffanteils sowie 5—7 Gew.-% Protein enthält, durch intensives Rühren in einem Rührbad, so daß ein homogenisierter Kolloidzustand der Milch erreicht wird, in dem enthaltenes Sojabohnenprotein homogen dispergiert und enthaltenes Sojabohnenfett homogen emulgiert ist,

(b) Zufügen einer stabilisierten wässerigen Lösung, die eine Menge an Magnesiumchlorid, einen Emulgator und eine Menge an emulgiertem genießbaren Öl enthält, zur Sojamilch, um eine Mischung daraus zu erhalten, in der 2—4 g an Magnesiumchlorid pro 1000 g an Sojamilch vorhanden sind,

(c) erneutes intensives Rühren der erhaltenen Mischung für 2—4 Sekunden unmittelbar nach dem vorhergehenden Schritt (b), so daß das zugefügte Magnesiumchlorid augenblicklich durch und durch in der Sojamilch dispergiert ist,

(d) Anhalten der Fließbewegung der Mischung im wesentlichen zu einem Stillstand unmittelbar nach dem vorhergehenden Schritt (c), d.h. vor dem Beginn der Koagulationsreaktion der Sojamilch mit dem Magnesiumchlorid, und

(e) Stehenlassen der Mischung bis zum koagulierten Gel.

2. Verfahren zur Herstellung eines Sojabohnenquarks nach Anspruch 1, dadurch gekennzeichnet, daß das Verfahren ferner zusätzliche Schritte umfaßt: Brechen des koagulierten Gels, Überführen des erhaltenen gebrochenen Gels in ein perforiertes Formgefäß, dessen perforierte Wände innenseitig mit einem wasserdurchlässigen Gewebe abgedeckt sind, und Formen dieses Gels unter Anwendung eines eingeregelten Drucks auf dieses zu einer Masse.

3. Verfahren zur Herstellung eines Sojabohnenquarks nach Anspruch 1, dadurch gekennzeichnet, daß das Verfahren ferner zusätzliche Schritte umfaßt: rasches Überführen der Mischung aus dem Rührbad in ein perforiertes Formgefäß, dessen perforierte Wände innenseitig mit einem wasserdurchlässigen Gewebe zusammen mit einer undurchlässigen Folie bedeckt sind, unmittelbar nach dem vorausgehenden Schritt (d) und Ausführen des folgenden Schritts (e) im perforierten Formgefäß, wobei die undurchlässige Folie im Verlauf des Schritts (e) entfernt wird.

4. Verfahren zur Herstellung eines Sojabohnenquarks nach Anspruch 1, dadurch gekennzeichnet, daß das Verfahren ferner einen zusätzlichen Schritt des raschen Überführens der Mischung von dem Rührbad in ein nicht-perforiertes Formgefäß unmittelbar nach dem vorausgehenden Schritt (d) umfaßt und der folgende Schritt (e) in dem nicht-perforierten Formgefäß ausgeführt wird.

5. Verfahren zur Herstellung eines Sojabohnenquarks nach Anspruch 1, dadurch gekennzeichnet, daß das Verfahren ferner einen zusätzlichen Schritt des Eingießens der Mischung und des Vakuumverpackens in je einem Behälter einer gewünschten Anzahl von Behältern unmittelbar nach dem vorausgehenden Schritt (d) umfaßt und der folgende Schritt (e) in jedem dieser Behälter unter einem beheizten Zustand ausgeführt wird.

6. Verfahren zur Herstellung eines Sojabohnenquarks nach Anspruch 1, dadurch gekennzeichnet, daß die Lösung ferner Phospholipid enthält.

7. Verfahren zur Herstellung eines Sojabohnenquarks nach Anspruch 1, dadurch gekennzeichnet, daß die Lösung ferner einen mit dieser vermischten Aromazusatzstoff enthält.

**Revendications**

1. Procédé pour la préparation de caillé de soja, dans lequel du chlorure de magnésium est utilisé comme coagulant, caractérisé en ce que le procédé comprend en combinaison les phases consistant à:

(a) homogénéiser par agitation intense une quantité de lait de soja préparée ayant 11—14% en poids de contenu solide et 5—7% en poids de protéine, dans un bain d'agitation, de façon à produire un état colloïdal homogénéisé dans lequel la protéine de soja contenue est dispersée de façon homogène et la graisse de soja contenue est émulsionnée de façon homogène;

(b) additionner une solution aqueuse stabilisée comprenant une quantité de chlorure de magnésium, un agent émulsionnant et une quantité d'huile comestible émulsionnée audit lait de soja pour obtenir un mélange dans lequel sont contenus 2—4 g de chlorure de magnésium par 1000 g dudit lait de soja;

(c) agiter encore de façon intense le mélange obtenu pendant deux à quatre secondes, immédiatement après la phase précédente (b), de telle façon que le chlorure de magnésium ajouté soit instantanément dispersé dans ledit lait de soja;

(d) arrêter l'écoulement dudit mélange jusqu'à un état pratiquement de repos immédiatement après la phase précédente (c) c'est-à-dire avant le commencement de la réaction de coagulation dudit lait de soja avec ledit chlorure de magnésium; et

(e) laisser ledit mélange en gel coagulé.

2. Procédé de préparation de caillé de soja selon la revendication 1, caractérisé en ce que le procédé comprend en outre des phases additionnelles de: broyage dudit gel coagulé; transfert du gel broyé obtenu dans un moule perforé ayant ses parois perforées couvertes intérieurement d'un tissu perméable à l'eau et moulage alors du produit en une masse par application sur lui d'une pression réglée.

3. Procédé de préparation de caillé de soja selon la revendication 1, caractérisé en ce que le procédé comprend en outre des phases additionnelles de: transfert rapide dudit mélange depuis ledit bain d'agitation jusque dans le moule perforé ayant ses parois perforées couvertes intérieurement d'un tissu perméable à l'eau avec une nappe imperméable, immédiatement après l'opération précédente (d); et l'opération suivante (e) est effectuée dans ledit récipient de moulage perforé dans lequel ladite nappe imperméable est enlevée au cours de ladite phase (e).

4. Procédé de préparation de caillé de soja selon la revendication 1, caractérisé en ce que le procédé comprend en outre une phase additionnelle de transfert rapide dudit mélange à partir dudit bain d'agitation jusque dans un réservoir de moule non-perforé immédiatement après ladite phase précédente (d), et la phase suivante (e) est accomplie dans un réservoir de moule non-perforé.

5. Procédé de préparation de caillé de soja selon la revendication 1, caractérisé en ce que le procédé comprend en outre une phase additionnelle de versage dudit mélange et son emballage sous vide dans chacun des réservoirs d'un nombre désiré de réservoirs immédiatement après la phase précédente (d); et la phase suivante (e) est accomplie dans chacun desdits réservoirs à un état chauffé.

6. Procédé de préparation de caillé de soja selon la revendication 1, caractérisé en ce que ladite solution comprend de plus un phospholipide.

7. Procédé de préparation de caillé de soja selon la revendication 1, caractérisé en ce que ladite solution comprend de plus un additif de saveur en mélange avec la solution.